# EUROPEAN PATENT APPLICATION

(11) **EP 2 161 704 A1**
(43) Date of publication of application: **10.03.2010**
(21) Application number: 08105256.5
(22) Date of filing: 05.09.2008
(51) Int. Cl.: G09F 19/18, G09F 19/20, G03B 21/26, H04N 9/31

(54) **Image projection apparatus**

(71) Applicant: Volohovs, Dmitrijs, Riga LV 1082 (LV)
(72) Inventor: Volohovs, Dmitrijs, Riga LV 1082 (LV)
(74) Representative: Anohins, Vladimirs

(57) **Abstract**

The present invention is an image projection apparatus (20) comprising a plurality of image projection devices, wherein said plurality of image projection devices comprises: a video image projection device, and a laser graphic image projection device. Preferably the apparatus may further comprise a common image processing controller. Further the apparatus may comprise a common projection tens. Still further the apparatus may contain common light dump. Advantageously, the image projection apparatus according to the present invention may use a common laser light source for the both video image projection device and laser graphic image projection device. Preferably, the laser light source is a solid-state laser. More preferably, a two directional solid-state laser may be use as the light source. Further, the present invention proposes a method of projecting an image comprising the steps of: a) providing an image projection apparatus comprising a video image projection device and a graphic laser image projection device; b) creating a video image beam (12); c) creating a laser graphic image beam (16); d) projecting said video image beam and said laser graphic image beam onto a common screen.

## Description

### FIELD OF THE INVENTION

This invention relates to an image projection apparatus and in particular to an image projection apparatus comprising a plurality of image projection devices.

### BACKGROUND OF THE INVENTION

There are many lighting and image projection apparatuses used during contemporary shows.

Among those apparatuses, play an important role video image projector devices that can project moving images and video images. Contemporary video image projectors offer extreme brightness and outstanding video performance on screens over ten meters wide.

An example of a video image projector is disclosed in U.S. Pat. No. 5,079,544. This projector uses digital micro-mirror devices for light source modulation, however other constructions of video projectors are also well known in the art.

Another type of the image projecting equipment frequently used during the show is a graphic laser, or a laser graphic image projection device. A graphic laser projects a super-bright laser light beam to draw complex patterns, text and animations, sometimes also called vector graphics.

Contemporary graphic lasers allow to control virtually every aspect of graphical output. They may write messages in laser light, or be used in a fogged room to display fantastic and exciting beam patterns including sound tunnels, liquid sky, dynamic beam effects and more.

The laser graphic projector can also be commanded to hear music and automatically create synchronized laser light shows on walls, ceilings, banners, boards and projection screens. It can operate as either a stand-alone device controlled by a keypad, or be controlled by an external computer or DMX interface.

Graphic lasers are also well known in the art. An example of a laser graphic image projector is disclosed in U.S. Pat. App. Pub. No. 2006/0158756.

The combination of two images, one created by a video image projector and the other created by a graphic laser creates fascinating visual effects. However, practical use of such combined visual effects is very limited, because of difficulties associated with installing and adjusting two different devices and complexity of coordinating their co-operation.

Another inconvenience of this need for two devices is essentially the cost of both devices.

Yet another inconvenience is that the use of both laser graphic and video image projection devices imposes creative limitations, as a choice must be made for each individual mounting position between a laser graphic projector and video projector.

The object of the invention is to provide a solution for one or more of the above-mentioned and other inconveniences. Another object of the invention is to make available visual effects more varied in form.

### SUMMARY OF THE INVENTION

The present invention is an image projection apparatus comprising a plurality of image projection devices, wherein said plurality of image projection devices comprises: a video image projection device, and a laser graphic image projection device.

Preferably the apparatus may further comprise a common image processing controller. Further the apparatus may comprise a common projection lens. Still further the apparatus may contain common light dump.

Advantageously, the image projection apparatus according to the present invention may use a common laser light source for the both video image projection device and laser graphic image projection device. Preferably, the laser light source is a solid-state laser. More preferably, a two-directional solid-state laser may be use as the light source.

Preferably, the video image projection device and the laser graphic image projection device are adapted to project on a generally the same screen surface.

Is some embodiments the use of laser light sources for the both he both video image projection device and laser graphic image projection device may allows to project images even on an uneven screen surface.

Further, the present invention proposes a method of projecting an image, the method comprising the steps of: a) providing an image projection apparatus comprising a video image projection device and a graphic laser image projection device; b) creating a video image beam; c) creating a laser graphic image beam; d) projecting said video image beam and said laser graphic image beam onto a common screen.

Preferably, the method further comprises a step of combining said video image beam and said graphic laser image beam into a composite image beam.

More preferably, method may further comprise a step of synchronizing said video image beam with said laser graphic image beam.

Advantageously, said graphic laser image beam is created from an input video image information.

### BRIEF DESCRIPTION OF THE DRAWINGS

FIG. 1 illustrates a prior art video image projection device;
FIG. 2 illustrates a prior art laser graphic image projection device;
FIG. 3 illustrates a first exemplary embodiment of an image projection apparatus in accordance with the present invention;
FIG. 4 is a schematic view of an image projection apparatus according to a first embodiment of the present invention;
FIG. 5 is a schematic view of control circuitry of an apparatus according to the present invention;
FIG. 6 illustrates a second exemplary embodiment of an image projection apparatus in accordance with the present invention;
FIG. 7 is a schematic view of an image projection apparatus according to the second embodiment of the present invention;
FIG. 8 illustrates an exemplary graphic laser image;
FIG. 9 illustrates an exemplary video image;
FIG. 10 illustrates a resulting image combining the laser image and the video image of FIGS. 8 and 9 respectively.

### DETAILED DESCRIPTION OF THE PREFERRED EMBODIMENTS

The present invention will be further described by way of non-limitative examples with reference to the accompanying drawings. The matter defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, description of well-known functions and constructions are omitted for clarity and conciseness.

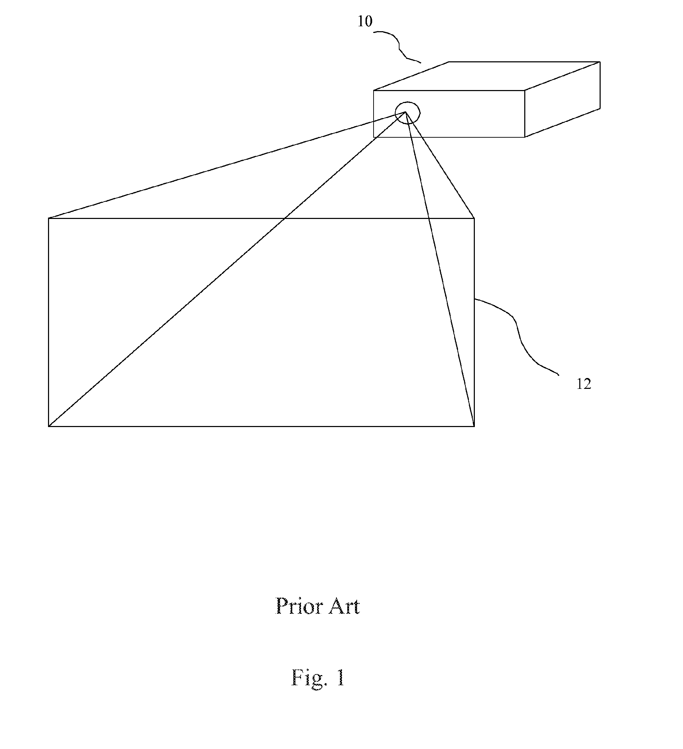

FIG. 1 illustrates a prior art video image projection device 10 or a video projector. A video projector takes a video signal and projects a video projector generated image 12 on a projection screen or any other surface. All video projectors use a very bright light source to project the image, and most modem ones can correct any curves, blurriness, and other inconsistencies through manual settings. Video projectors are widely used for entertainment, conference room presentations, classroom training, and home theatre applications.

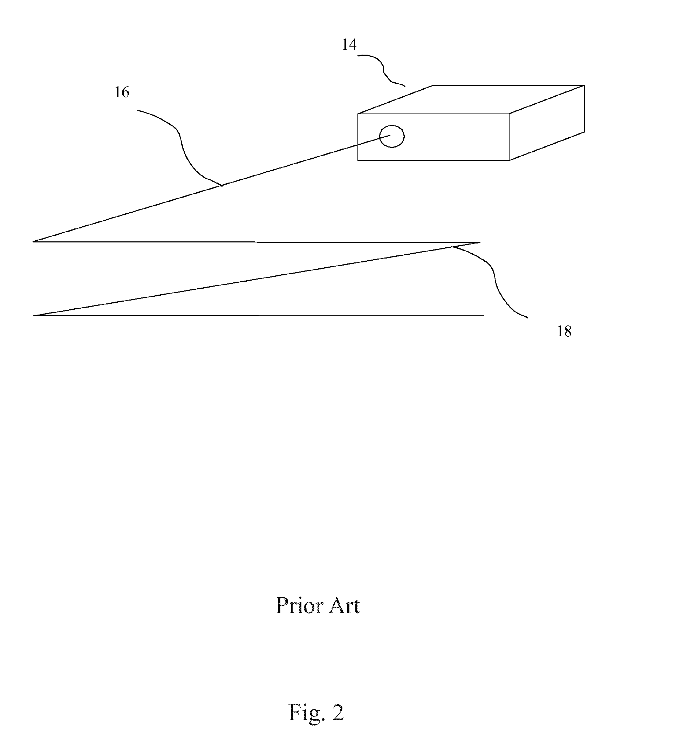

FIG. 2 illustrates a prior art laser graphic image projection device 14 or a laser graphic projector. Basically, the laser graphic projectors 14 are used for entertainment industry to create colorful visual effects. Most high-end laser projectors are custom-built and some functions are incorporated accordance with which type of effect is required. The laser graphic projector 14 generates laser beam 16, and fast movement of laser beam 16 creates a laser graphic projector generated image 18.

### First preferred embodiment

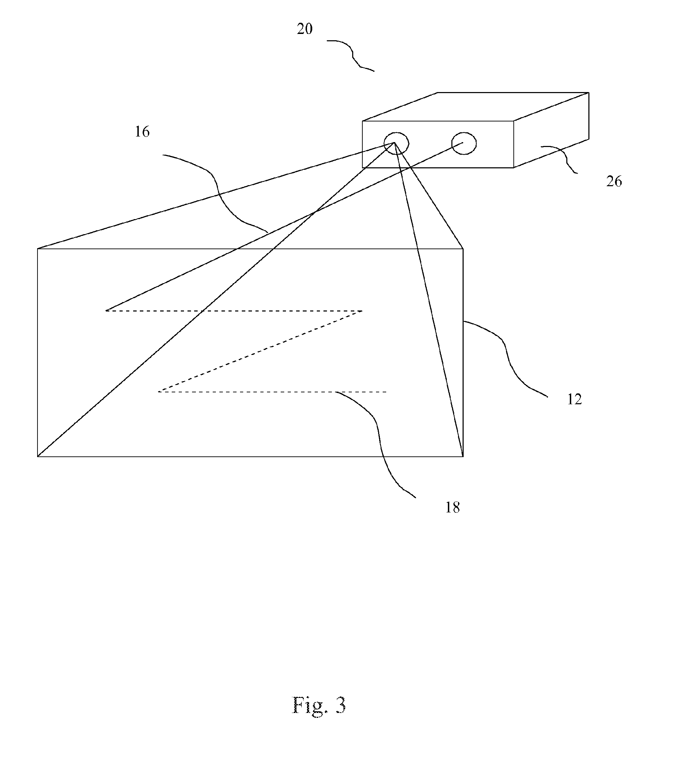

FIG. 3 illustrates an image projection apparatus 20 in accordance with the present invention. The image projection apparatus 20 comprises a video projector and graphic laser combined in common housing 26. In accordance with present invention, the image projection apparatus 20 is able to project both a video projector generated image 12 and a laser graphic projector generated image 18 and is able to generate a collage image created from combination of the video projector generated image 12 and laser graphic projector generated image 18.

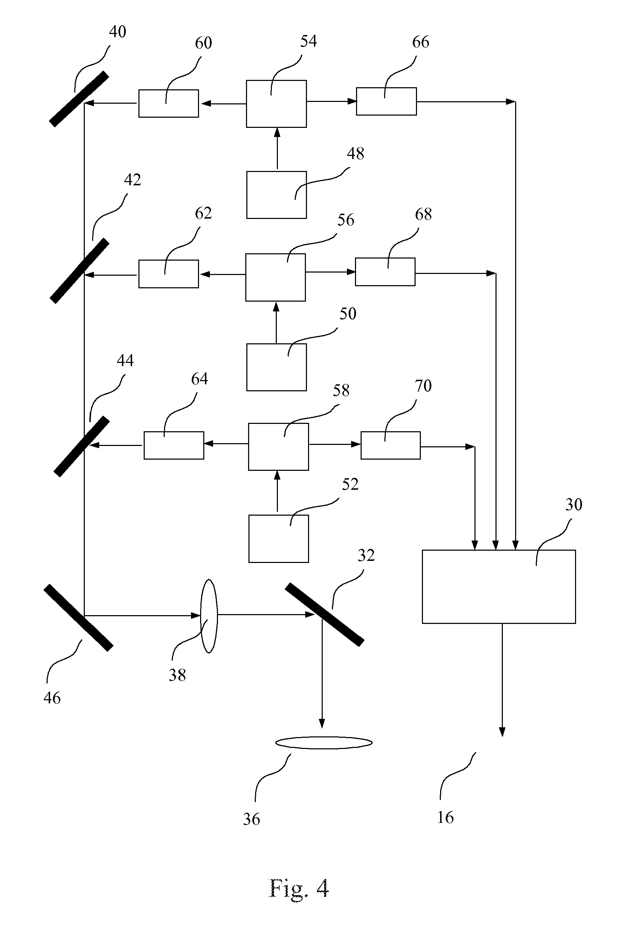

FIG. 4 is a schematic view of image projection apparatus 20 according to the first exemplary embodiment of the present invention.

In the first exemplary embodiment, a digital light projection device 20 comprises three laser sources or modules which serve as light sources for the both video image projection device and laser graphic image projection device, namely a red laser module 48, green laser module 50, and blue laser module 52. According to the exemplary embodiment the laser modules 48, 50, and 52 are constantly output unmodulated red, green and blue coherent light to the appropriate red laser beam splitter 54, green laser beam splitter 56, blue laser beam splitter 58. Each of beam splitters splits an appropriate unmodulated red, green and blue coherent light into two appropriate unmodulated red, green and blue coherent light beams, one portion of which are supplied to video image projector, to projector red beam light valve 60, projector green beam light valve 62, and projector blue beam light valve 64. Another portion of spitted unmodulated red, green and blue coherent light beams are supplied to an appropriate laser red beam light valve 66, laser green beam light valve 68, and laser blue beam light valve 70.

The laser modules 48, 50 and 52 may be of any known type of laser which is able to generate light in visible spectrum, preferably generate beams of red, green and blue light. It can be a Novalux laser modules, which are primary used as a light source in new generation of projectors.

Preferably, solid-state laser may be used. Further, if two-directional solid-state lasers are used there is not need in laser beam splitters and the apparatus may be further simplified.

The light beams after laser beam light valves 66, 68, and 70 are supplied to laser optic unit 30 where unmodulated red, green and blue coherent light beams may be modulated in accordance with image data, provided by laser control unit 72 (not shown at this drawing).

The laser optic unit 30 contains the galvanometer scanners and scanner amplifiers, which together move the beam fast enough to create graphics. It may also contain an intensity device that blanks and/or colors the laser beam. In the first embodiment, the laser beam 16 is projected directly from the optic unit 30.

The light beams after projector light valves 60, 62, and 64 are supplied to an appropriate red dichroic mirror 40, green dichroic mirror 42, and blue dichroic mirror 44. The lights are then combined at folding mirror 46 and through illumination lens 38 passed to digital micro-mirror device 32. The lights reflected from the digital micro-mirror device 32 are then passed to projection lens 36.

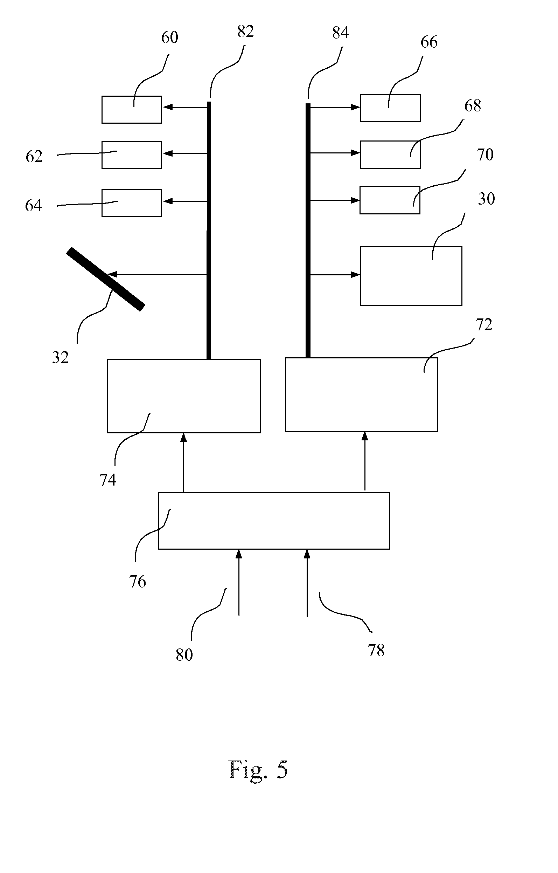

FIG. 5 is a schematic view of control circuitry of image projection apparatus 20 according to exemplary embodiment of the present invention. The control circuitry comprises a laser control unit 72 connected with laser control bus 84 and through the bus 84 the laser control unit 72 is connected to laser red beam light valve 66, laser green beam light valve 68, laser blue beam light valve 70, and laser optic unit 30.

Further, the control circuitry comprises a video projector control unit 74 connected with video projector control bus 82 and through the bus 43 the video projector control unit 74 is connected to projector red beam light valve 60, projector green beam light valve 62, projector blue beam light valve 64, and digital micro-mirror device 32.

Finally, the control circuitry comprises a common image processing controller 76 which receives laser data input 78 and video data input 80 and generate control signals for laser control unit 72 and video projector control unit 74. The controller 76 manipulates with laser data and video data to create desired visual effects.

### Second preferred embodiment

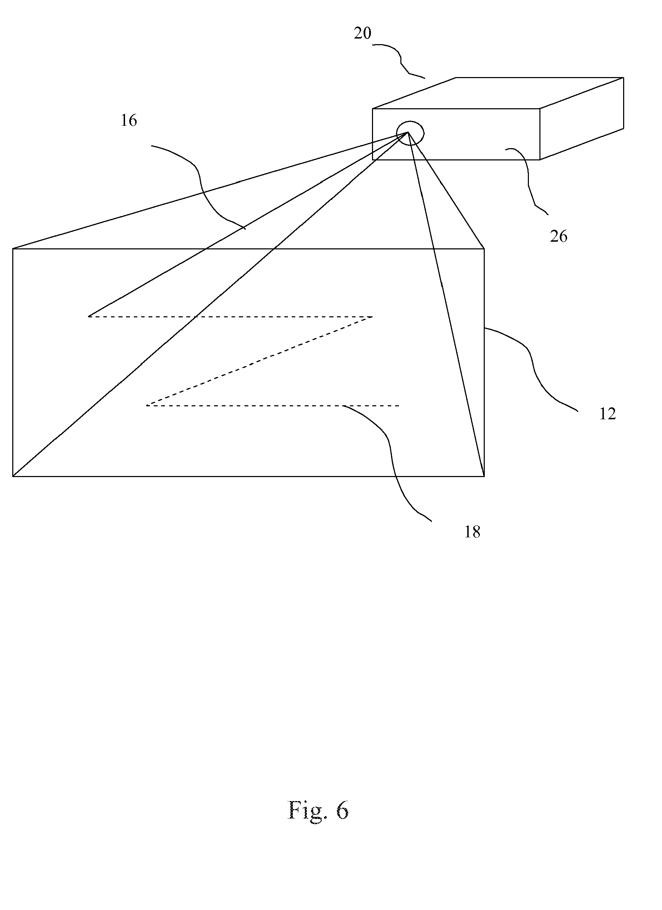

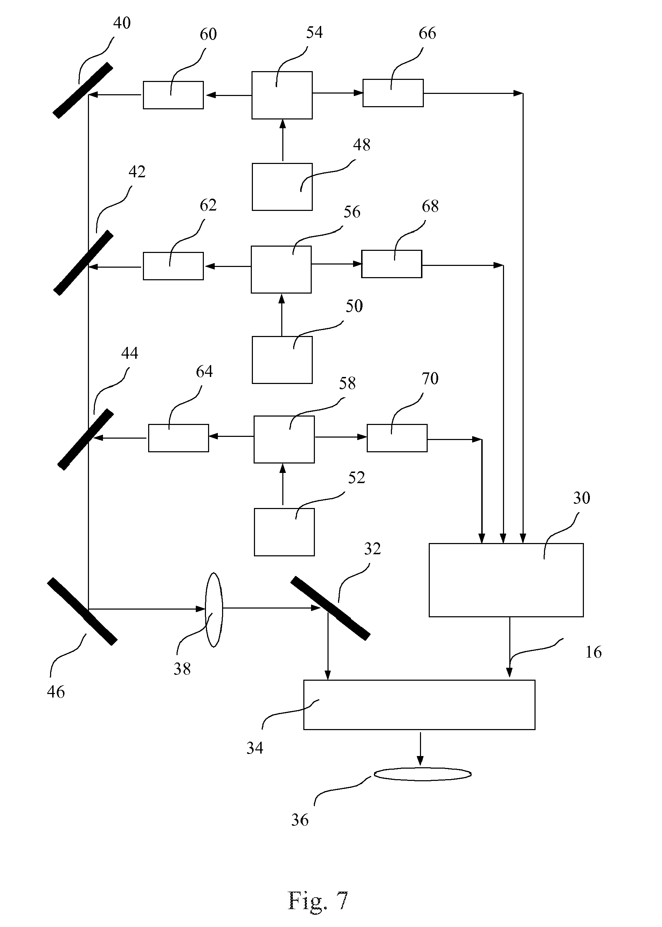

The second preferred embodiment is shown on FIG. 6 and FIG. 7. The second embodiment differ from the first embodiment in that the laser beam 16 projected by the laser optic unit 30 and video image lights reflected from the digital micro-mirror device 32 are passed to beam combiner 34. The beam combiner 34 combines video projector generated light and laser graphic generated light into a composite image beam. The composite beam is then passed to projection lens 36.

In preferred embodiment, the beam combiner 34 is an X-prism assembly. Howether, it is well understood, that beam combiner may include, but not limited to, an X-prism assembly, TIR prism assembly, dual TIR prism assembly, polarization beam combiner assembly, optomechanical beam combiner assembly, a reversed Cassegranian mirror arrangement assembly, or any other known optical combiner device.

In operation, video data from external source is supplied to video data input 80, and laser data from external source is supplied to laser data input 78. The common image processing controller 76 receive both video data and laser data. The image processing controller 76 manipulates with lased data and projector data to create desired effects.

A typical laser data contains gobos, animations, logo and simple graphics like lines, circles, object contours, etc. A typical video data contains video data like movies, presentations, etc.

The common image processing controller 76 may perform different mathematical manipulation of both laser data and video data. In particular case, controller 76 may deduct, subtract and blend laser data and video data to create effects according to selected parameters. The image processing controller 76 may perform simple and complex processing of laser data and video data.

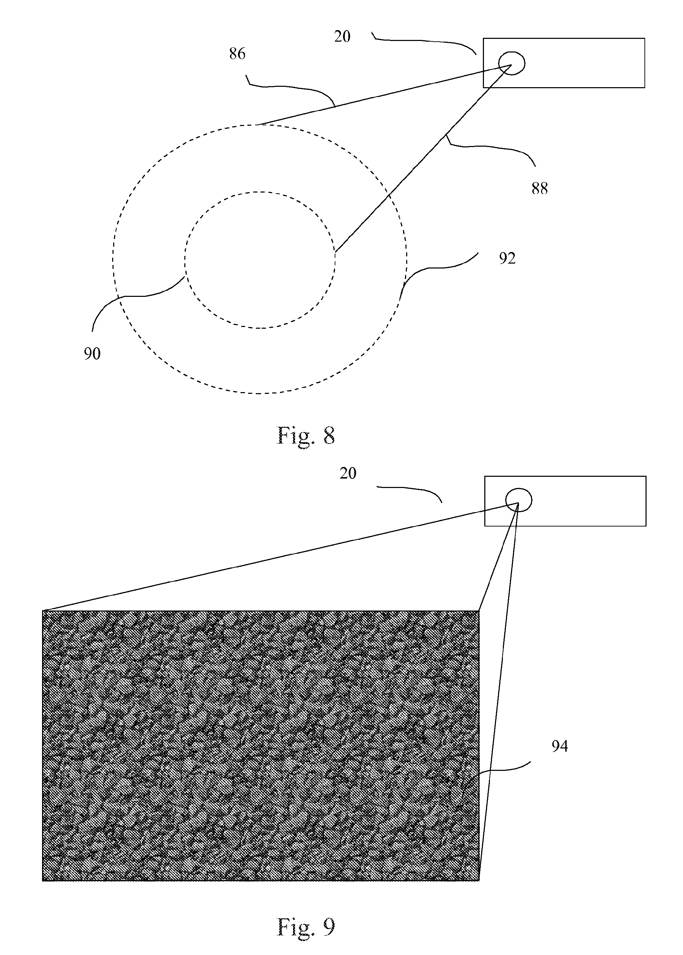

FIG. 8 illustrates an exemplary laser image, which contains first laser beam 86 and second laser beam 88, where first laser beam 86 forms a first circle 92, and second laser beam 88 forms a second circle 90. A first circle 92 contains inside a second circle 90.

FIG. 9 illustrates an exemplary video data, which contains a rectangular regular video picture 94.

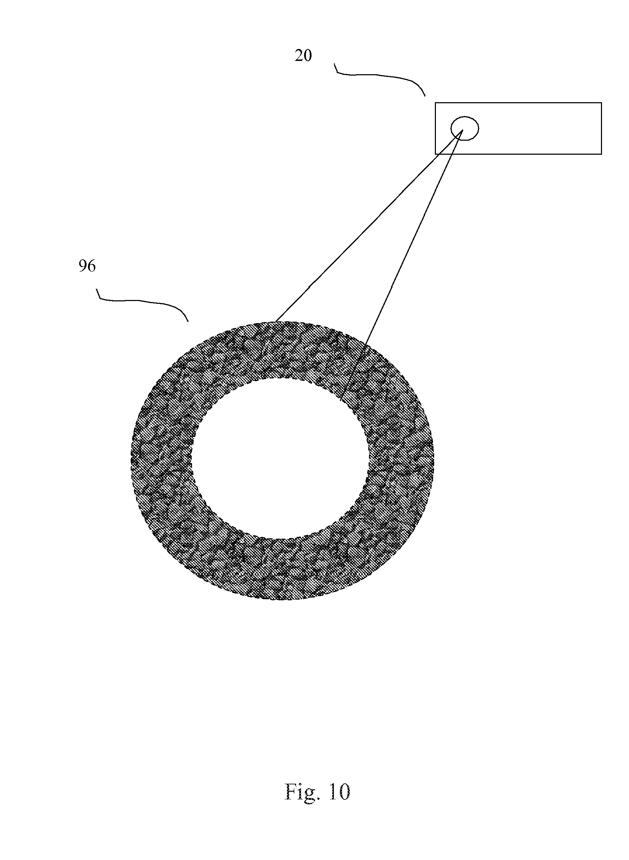

FIG. 10 illustrates a combined image 96, which is a result of processing of laser data and video data by processing controller 76 in accordance with present invention. The image 96 is constructed by subtracting laser data from video data. In particular case, external area of first circle 92 was subtracted from video picture 94, and internal area of second circle 90 was subtracted from video picture 94.

A person skilled in the art will appreciate that many other manipulations with data may be performed by processing controller 76.

For example, a CCD camera can be connected to the common image processing controller 76 for the purpose of focusing of video projector beam and laser graphic beam. This operation can be done remotely from show control desk. In another embodiment, a CCD camera can be used for surveillance of projected area, for example, being connected to remote control or security center.

A micro-mirror device and some types of light valves require a light dump to consume waste of light generated by its nature during their operation. In a preferred embodiment, the image projection apparatus may have common light dump for digital micro-mirror device and light valves. Thus, only one cooling system for light dump is necessary. This is another advantage of proposed image projector apparatus.

Further, in accordance with the present invention, an image projector apparatus 20 may be placed on moving head. In that case, a common image processing controller 76 may perform also control of image projector apparatus movement.

### PARTS LIST

To assist the reader in understanding the present invention, all reference numbers used herein are summarized in the table below, along with the elements they represent:
10 video image projection device (prior art)
12 video projector generated image
14 laser graphic image projection device (prior art)
16 laser graphic image beam
18 laser graphic projector generated image
20 image projection apparatus
26 common housing
30 laser optic unit
32 digital micro-mirror device
34 beam combiner
36 projection lens
38 illumination lens
40 red dichroic mirror
42 green dichroic mirror
44 blue dichroic mirror
46 folding mirror
48 red laser module
50 green laser module
52 blue laser module
54 red laser beam splitter
56 blue laser beam splitter
58 green laser beam splitter
60 video projector red beam light valve
62 video projector green beam light valve
64 video projector blue beam light valve
66 laser red beam light valve
68 laser green beam light valve
70 laser blue beam light valve
72 laser control unit
74 video projector control unit
76 common image processing controller
78 laser data input
80 video data input
82 video projector control bus
84 laser control buss
86 first laser beam
88 second laser beam
90 second circle
92 first circle
94 video picture
96 combined image.

## Claims

1. An image projection apparatus comprising a plurality of image projection devices,
wherein said plurality of image projection devices comprises:
a video image projection device, and
a laser graphic image projection device.

2. The apparatus of claim 1 further comprising a common image processing controller (76).

3. The apparatus of claim 1 further comprising a common projection lens (36).

4. The apparatus of claim 1, 2, or 3, wherein the video image projection device uses a laser light source (48, 50, 52).

5. The apparatus of claim 4 wherein the laser light source (48, 50, 52) is common for the both video image projection device and laser graphic image projection device.

6. The apparatus of claim 5 wherein the laser light source (48, 50, 52) is a solid-state laser.

7. The apparatus of claim 6 wherein the laser light source (48, 50, 52) is a two-directional laser light source.

8. The apparatus of claim 1 wherein the video image projection device and the laser graphic image projection device are adapted to project on a generally the same screen surface.

9. The apparatus of claim 8 wherein the screen surface is an uneven surface.

10. The apparatus of claim 4, 5, 6, 7, 8, or 9 comprising a common light dump.

11. The apparatus of claim 1 further comprising a moving head mount.

12. A method of projecting an image comprising the steps of:
a) providing an image projection apparatus comprising a video image projection device and a graphic laser image projection device;
b) creating a video image beam;
c) creating a laser graphic image beam;
d) projecting said video image beam and said laser graphic image beam onto a common screen.

13. The method of claim 12 further comprising a step of combining said video image beam and said graphic laser image beam into a composite image beam.

14. The method of claim 12 further comprising a step of synchronizing said video image beam with said laser graphic image beam.

15. The method of claim 12 wherein said graphic laser image beam is created from an input video image information.
